# EUROPEAN PATENT APPLICATION

(11) **EP 4 339 025 A1**
(43) Date of publication of application: **20.03.2024**
(21) Application number: 22211120.5
(22) Date of filing: 02.12.2022
(51) Int. Cl.: B60Q 5/00, H01H 13/14, G08G 1/16

(54) **MANNER KNOCK HORN DEVICE FOR VEHICLE**

(30) Priority: 19.09.2022 KR 20220117760
(71) Applicant: Kim, Taeoan, Ulsan 44548 (KR)
(72) Inventor: Kim, Taeoan, Ulsan 44548 (KR)
(74) Representative: M. Zardi & Co S.A.

(57) **Abstract**

The present invention relates to a manner knock horn device for a vehicle, and more particularly to technology that replaces an existing horn installed in a vehicle, enables accurate information transfer between drivers, overcomes the problem of causing discomfort due to a loud horn sound, and is easily installable in the vehicle. The manner knock horn device for a vehicle includes: a switch device installed in the inside of a vehicle, and configured such that one or more voice messages are stored therein in advance and it transmits voice message information by means of an operation button; and a speaker device installed to be attached to the vehicle at a location away from the switch device, and configured to be wirelessly connected to the switch device and to generate a voice signal to the outside in accordance with the transmitted voice message information.

## Description

### CROSS-REFERENCE TO RELATED APPLICATION

This application claims the benefit of Korean Patent Application No. 10-2022-0117760 filed on September 19, 2022, which is hereby incorporated by reference herein in its entirety.

### BACKGROUND

### 1. Technical Field

The present invention relates to a manner knock horn device for a vehicle, and more particularly to technology that replaces an existing horn installed in a vehicle, enables accurate information transfer between drivers, overcomes the problem of causing discomfort due to a loud horn sound, and is easily installable in the vehicle.

### 2. Description of the Related Art

Generally, most cars are equipped with horn devices capable of generating loud horn sounds to the outside, so that drivers warn or notify other vehicles or people by making horn sounds in various situations.

However, various problems occur in that a horn sound is transmitted to other drivers and/or pedestrians contrary to a driver's intention, resulting in problems such as quarrels, retaliatory driving, etc., and noise pollution in a city is caused by the problem of habitually honking the horn devices in the situations in which it is not necessary to sound horns.

In addition, since horn sounds are set to considerably high levels and horn speakers are installed in the front sides of bonnets, there is a structural problem that may damage the hearing of short children.

As a related art, Korean Utility Model Registration No. 20-0483745 (entitled "Vehicle Manner Horn Device) discloses a technology including: a main horn sound generator provided in a vehicle, and configured to generate a main horn sound; a sub-horn sound generator provided in the vehicle, and configured to generate a sub-horn sound that is lower than the main horn sound; a main horn button provided on the steering wheel of the vehicle; a sub-horn button provided on the steering wheel of the vehicle; and an electronic control unit configured to generate a main horn sound through the main horn sound generator when the main horn button is pressed and also configured to generate a sub-horn sound lower than the main horn sound through the sub-horn sound generator when the sub-horn button is pressed.

This related art discloses a technology that reduces noise by making a sub-horn sound composed of a lower sound and allows the sub-horn sound to be used in parallel with a loud horn sound. However, this related art simply reduces the level of a horn sound. This related art is problematic in that it is cumbersome to install and use the horn device because the two horn sound generators are used, the discomfort of drivers and/or pedestrians attributable to horn sounds themselves is still present, and the horn sounds each composed of a single sound make it difficult to deliver accurate information to other drivers and/or pedestrians.

### [Related Art Literature]

Patent Document 1: Korean Utility Model Registration No. 20-0483745 entitled "Vehicle Manner Horn Device"

### SUMMARY

The present invention has been conceived to overcome the above-described problems, and an object of the present invention is to provide a manner knock horn device for a vehicle that allows a device capable of controlling horn sounds to be installed in the inside of a vehicle and can transmit voices not causing discomfort to other drivers and/or pedestrians instead of existing noisy horn sounds, so that noise pollution can be reduced and secondary accidents can be prevented by accurately delivering the information of a driver.

According to an aspect of the present invention, there is provided a manner knock horn device for a vehicle, the manner knock horn device including: a switch device installed in the inside of a vehicle, and configured such that one or more voice messages are stored therein in advance and it transmits voice message information by means of an operation button; and a speaker device installed to be attached to the vehicle at a location away from the switch device, and configured to be wirelessly connected to the switch device and to generate a voice signal to the outside in accordance with the transmitted voice message information.

The switch device may include a main body, the operation button formed at the center of the top of the main body, and a setting button provided on one side of the operation button and configured to switch between the voice messages.

The setting button may be formed to have a size smaller than that of the operation button.

A depressed portion may be formed in the top of the main body in the form in which the depth thereof increases toward the center and the operation button is formed in the center inside the depressed portion, so that the operation button is disposed in the form of being retreated inward.

### BRIEF DESCRIPTION OF THE DRAWINGS

The above and other objects, features, and advantages of the present invention will be more clearly understood from the following detailed description taken in conjunction with the accompanying drawings, in which:
FIG. 1 is a view showing the overall configuration of a manner knock horn device for a vehicle according to the present invention;
FIG. 2 is a view showing a switch device in the manner knock horn device for a vehicle according to the present invention;
FIG. 3 is a view showing another embodiment in which a manner knock horn device for a vehicle according to the present invention further includes a vehicle information collection terminal; and

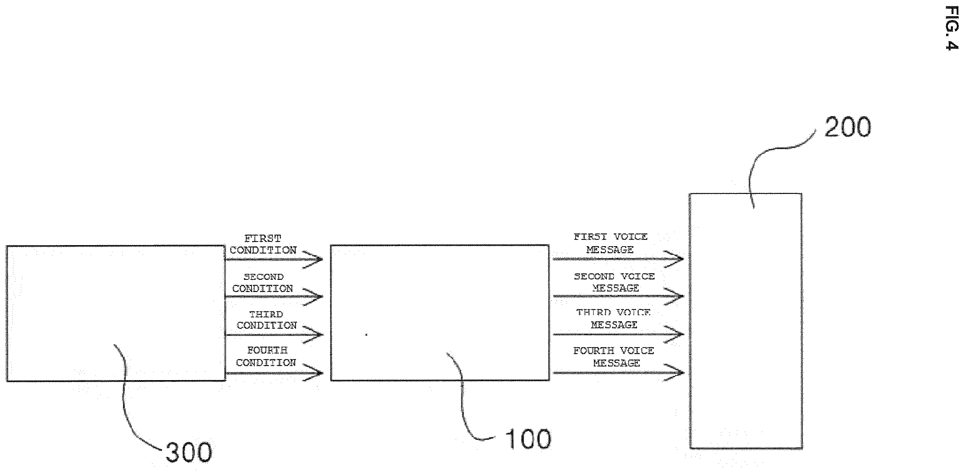

FIG. 4 is a view showing an example of switching between voice messages using the vehicle information collection terminal of the present invention.

### DETAILED DESCRIPTION

Embodiments of the present invention will be described in detail below with reference to the accompanying drawings. In the description of the present invention, when it is determined that a detailed description of a related known function or configuration may unnecessarily obscure the gist of the present invention, the detailed description will be omitted.

A conventional horn device has been used in such a manner that it is provided on the steering wheel of a vehicle and generates a predetermined horn sound. However, since this type of horn sound corresponds to excessively loud and unpleasant noise, it causes various social problems. Accordingly, the present invention is intended to solve this problem.

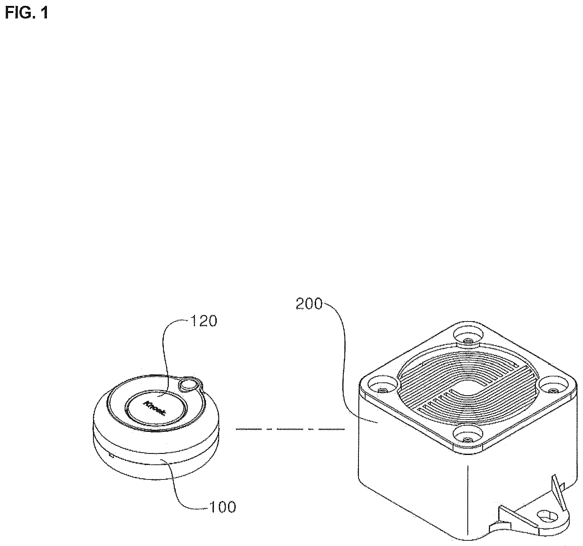

As shown in FIG. 1, the manner knock horn device for a vehicle according to the present invention includes: a switch device 100 installed in the inside of a vehicle, and configured such that one or more voice messages are stored therein in advance and it transmits voice message information by means of an operation button 120; and a speaker device 200 installed to be attached to the vehicle at a location away from the switch device 100, and configured to be wirelessly connected to the switch device 100 and to generate a voice signal to the outside in accordance with the transmitted voice message information.

The switch device 100 of the present invention is installed in the inside of a vehicle, and may be installed at a location desired by a user near a steering wheel or near a central media or air conditioner operation part. An installation method may be configured to have an adhesive function on the opposite side of the operation button 120 to enable easy attachment, or may be installed to be detachably attached using a magnet.

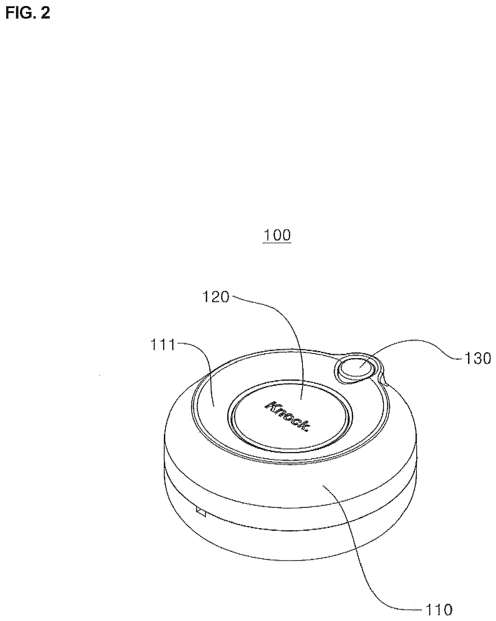

As shown in FIG. 2, the switch device 100 includes a main body 110, the operation button 120 formed at the center of the top of the main body 110, and a setting button 130 provided on one side of the operation button 120 and configured to switch between the voice messages. The operation button 120 is used to transmit an operation signal so that a voice message can be transmitted to the speaker device 200, and the setting button 130 is used to switch a voice message to be transmitted.

The types of voice messages transmitted through the operation button 120 may correspond to various types of messages, such as "Thank you," "Please move away," and "Hold on a second." The voice messages may be embedded into the switch device 100 by itself, may be switched through the setting button 130, and may be set in Korean and foreign languages by pressing the setting button 130 for a long time.

Accordingly, it is preferable that the operation button 120 to be pressed most frequently is formed as a large button in the center of the main body 110 for convenience of use and the setting button 130 to be pressed less frequently than the operation button 120 is formed to have a size smaller than that of the operation button 120.

Additionally, it is preferable that a depressed portion 111 is formed in the top of the main body 110 in the form in which the depth thereof increases toward the center and the operation button 120 is formed in the center inside the depressed portion 111, so that the operation button 120 is formed in the form of being retreated inward, as shown in the drawing.

As the operation button 120 is formed in the depressed portion 111 of the main body 110, there are advantages in that a user can be prevented from accidentally and erroneously pressing the operation button 120 because the operation button 120 does not protrude from the main body 110 and the user can easily find the location of the operation button 120 only with the touch of a finger without checking location with the user's eyes.

The speaker device 200 of the present invention is attached to a location away from the switch device 100, and is preferably installed inside the bonnet of the vehicle. Although power may be supplied to the speaker device 200 by the speaker device's own battery, power may be supplied by the battery of the vehicle.

The speaker device 200 is wirelessly connected to the switch device 100, and is configured to directly generate a voice signal to the outside in accordance with a voice message transmitted through the switch device 100. In other words, when the voice message information "Thank you" is transmitted through the switch device 100, a voice signal corresponding to "Thank you" is generated through the speaker device 200 so that the drivers of other vehicles and/or pedestrians can hear it.

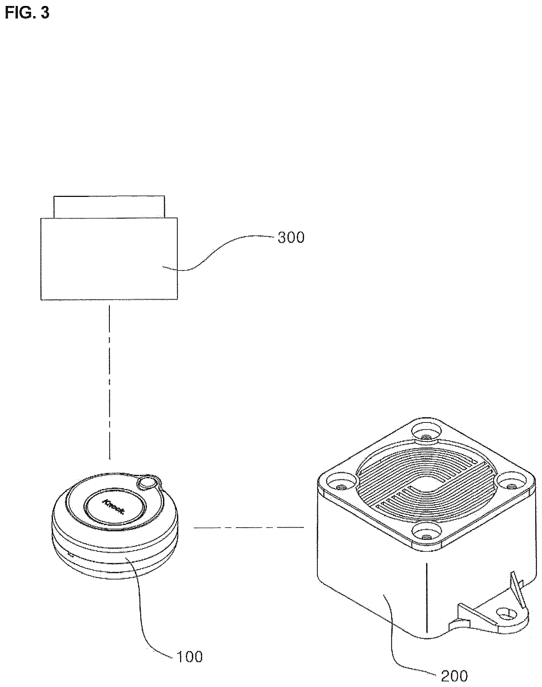

Additionally, the manner knock horn device for a vehicle according to the present invention may further include a vehicle information collection terminal 300 that is connected to an on-board diagnosis (OBD) terminal provided in the vehicle, as shown in FIG. 3. The OBD terminal of the vehicle is intended to transmit various types of information of the vehicle to other external devices, and is mainly used for fault diagnosis.

The vehicle information collection terminal 300 may be coupled to the OBD terminal of the vehicle, and collected information may be used in the form of operating in conjunction with the switch device 100. In otherwords, the voice message of the switching device may be automatically switched according to a situation based on the information collected through the vehicle information collection terminal 300.

In other words, the vehicle information collection terminal 300 enables wireless communication with the switch device 100, and provides the current situation of the vehicle to the switch device 100. Accordingly, when the operation button 120 of the switch device 100 is pressed, one of the signals of different types of voice messages is transmitted to the speaker device 200 according to the current situation of the vehicle.

The vehicle information provided through the vehicle information collection terminal 300 includes measured time, engine speed, vehicle speed, a gear lever position, an accelerator pedal amount, instantaneous fuel consumption, engine warning light, GPS latitude/longitude, a gear stage, the presence or absence of pedal and side brakes, the inclinations of X/Y/Z axes, the presence or absence of an air conditioner, instantaneous torque, the steering angle of a steering wheel, whether a seat belt is buckled, and the state of a direction indicator light based on the OBD2 terminal.

Accordingly, the switching between the voice messages of the switching device using the vehicle information collection terminal 300 may be performed as follows. In the case where a directional signal is operated when the speed of the vehicle is a predetermined speed or lower, a first condition may be met and thus a first voice message may be selected. In the case where an emergency flasher is operated when the vehicle is stopped, a second condition may be met and thus a second voice message may is selected. In the case where the speed of the vehicle is a predetermined speed or higher when a gear lever is in a reverse position, a third condition may be met and thus a third voice message may be selected. In the case where the emergency flasher is activated when the speed of the vehicle and the amount of pressing of an accelerator pedal exceed respective set values within a predetermined time, a fourth condition may be met and thus a fourth voice message may be selected.

The situations of the voice messages are described as follows:
The first voice message corresponds to the first condition for a situation in which traffic lanes are changed at a low speed or in a stopped state. A preferred example of the first voice message may be "Hold on a minute" and "I will change traffic lanes."

Furthermore, it is preferable that when the operation button 120 is pressed within a predetermined time in the state in which the first voice message has been transmitted, a state in which the lanes have been changed is recognized and thus a first-first voice message is transmitted. In this case, the first-first voice message may preferably be a message such as "Thank you" because the lanes have been changed due to the yield of the following vehicle.

The second voice message may be applied as "This vehicle is temporarily stopped" in the second condition for a situation in which the vehicle is temporarily stopped. Furthermore, the third voice message may be applied as a message such as "This vehicle will reverse" and "Be careful" in the third condition for a situation in which a user wants to notify other drivers and/or pedestrians of the fact that the vehicle will reverse.

In addition, the fourth voice message corresponds to the fourth condition for a situation in which it is necessary to notify another driver of rapid acceleration. In this case, the messages "I will pass first" and "I have an urgent business" may be applied as a desirable message for this condition.

When the first, second, third, and fourth conditions are not met, the switch device 100 selects a default voice message. The default voice message is selected as a message that is most frequently used by a user. This voice message may be changed by a user through the setting button 130 as desired, as described above.

The present invention has the effect of preventing accidents in advance by accurately delivering the situations of a user's own vehicle to other drivers and/or pedestrians in the form of the voice messages. Furthermore, the present invention has the effect of minimizing quarrels between drivers and preventing secondary accidents such as retaliatory driving by delivering messages that do not offend others even in the same situations in which the conventional horn device is pressed.

In addition, the present invention has the effect of increasing the convenience of installation of the horn device and enabling the horn device to be used conveniently by various drivers of all ages and genders.

Although the present invention has been described above with reference to the above embodiments, it is obvious that various modifications may be made within the scope of the technical spirit of the present invention.

## Claims

1. A manner knock horn device for a vehicle, the manner knock horn device comprising:
a switch device installed in an inside of a vehicle, and configured such that one or more voice messages are stored therein in advance and it transmits voice message information by means of an operation button; and
a speaker device installed to be attached to the vehicle at a location away from the switch device, and configured to be wirelessly connected to the switch device and to generate a voice signal to an outside in accordance with the transmitted voice message information.

2. The manner knock horn device of claim 1, wherein the switch device comprises a main body, the operation button formed at a center of a top of the main body, and a setting button provided on one side of the operation button and configured to switch between the voice messages.

3. The manner knock horn device of claim 2, wherein the setting button is formed to have a size smaller than that of the operation button.

4. The manner knock horn device of claim 2, wherein a depressed portion is formed in the top of the main body in a form in which a depth thereof increases toward a center and the operation button is formed in the center inside the depressed portion, so that the operation button is disposed in a form of being retreated inward.
